# EUROPÄISCHE PATENTANMELDUNG

(11) **EP 0 562 395 A1**
(43) Veröffentlichungstag der Anmeldung: **29.09.1993**
(21) Anmeldenummer: 93104082.8
(22) Anmeldetag: 12.03.1993
(51) Int. Cl.: G11B 5/704, G11B 5/64

(54) **Magnetisches Aufzeichnungssystem zur Herstellung von Computer-Festspeicherplatten**

(30) Priorität: 25.03.1992 DE 4209706
(71) Anmelder: BAYER AG, 51368 Leverkusen (DE)
(72) Erfinder: Sirinyan, Kirkor, Dr., W-5060 Bergisch Gladbach 2 (DE); Trupp, Rüdiger, Dr., W-5090 Leverkusen (DE)

(57) **Zusammenfassung**

Es wird ein magnetisches Aufzeichnungsmedium für Computer-Festspeicherplatten beschrieben, das neben einer Trägerschicht aus amorphem Kunststoff und einer magnetisierbaren Metallschicht eine haftvermittelnde, UV-härtende Zwischenschicht aufweist. Auf diese Weise erhält das magnetische Aufzeichnungsmedium eine Dauerhaftigkeit, wie sie für den Computerbereich erforderlich ist.

## Beschreibung

Die Erfindung betrifft ein magnetisches Aufzeichnungsmedium, bestehend aus einem Kunststoffträger und einer magnetisierbaren Deckschicht sowie gegebenenfalls einer nicht magnetischen weiteren metallischen Zwischenschicht.

Bekannt sind flexible, wickelbare Tonbänder, die auf einem dünnen Kunststoffträger, beispielsweise aus teilkristallinem Polyester, eine mit Bindemittel versetzte, magnetisierbare Schicht aus Metalloxiden oder Kobaltferrit aufweisen.

Das technische Gebiet der vorliegenden Erfindung betrifft jedoch Aufzeichnungsmedien zur Herstellung sogenannter Festspeicherplatten, z.B. für den Computerbereich. Diese bestehen aus einem Aluminiumträger, einer magnetisierbaren Co-, CoP-, CoB-, Ni-, NiP-, NiB- oder CoNiP- bzw. CoNiB-Auflage und einem Schutzfilm. Das Aufbringen der magnetisierbaren Metallauflage wird in bekannter Weise durch Vakuumbedampfen (vgl. hierzu Y. Maeda et al., Jap. J. Appl. Phys. 20 (1981), 467, oder R. Sugita et al., IEEE Trans. Magn. MAG 17 (1981), 3172) oder naßchemischer Metallabscheidung (vergl. hierzu R. Weiner, Chemische Vernickelung, Eugen G. Lenze Verlag, Saulgau/Württ., (1974)) vorgenommen.

Folgende Nachteile sind allen herkömmlichen Festspeicherplatten gemeinsam: Ihre Herstellung ist mit großen Ausschußraten verbunden und kostenintensiv; zudem haben sie eine relativ hohe Masse. Aus diesem Grund ist ihr Einsatz im Bereich von tragbaren Computern bzw. preiswerten Speichersystemen eingeschränkt. Die höhere Masse und die damit höheren Beschleunigungskräfte führen zu einer stärkeren Belastung und schnellerem Verschleiß des Computerlaufwerkes.

Damit Festspeicherplatten im Computerbereich eingesetzt werden können, muß sich ihre ferromagnetische Schicht durch ihre hohe Koerzitivkraft bzw. Restflußdichte auszeichnen (vgl. hierzu J. Worst et al., Thin Solid Films, 101, (1983), 75; R.D. Fisher et al., Electronics, (1982), 131 und T. Okuwaki et al., J. Appl. Phys. 53, (1982), 2588).

Um den magnetisierbaren Metallteilchen besseres Aufzeichnungsverhalten zu verleihen, werden in der Literatur mehrere Verbesserungsmaßnahmen vorgeschlagen (vgl. hierzu DE-A-3 188 278). Mit Hilfe dieser Maßnahmen aufgebrachte magnetisierbare Auflagen auf Kunststoff haben ein mittleres Eigenschaftsprofil und sind zur Herstellung von Computer-Festplatten ungeeignet.

Um magnetisierbare Schichten mit genügend hoher Koerzitivkraft bzw. Restflußdichte zu erzeugen, müssen die bereits erwähnten Kunststoffe mit bindemittelfreiem Co, Ni bzw. deren Legierungen mit Phosphor oder Bor versehen werden. Ein dichtes Aufbringen der magnetisierbaren, bindemittelfreien Metallauflagen mittels üblichen Applikationsmethoden - Vakuumbedampfung oder naßchemische Metallabscheidung - führt zu Auflagen mit sehr geringer Haftung bzw. Abriebfestigkeit gegenüber dem Kunststoffträger.

Der Erfindung lag daher die Aufgabe zugrunde, ein magnetisches Aufzeichnungsmedium, das sich durch eine schnelle, preiswerte Herstellbarkeit bzw. geringe Masse bei einer Speicherkapazität von 10 Mbyte bis 1 GByte, vorzugsweise bei 100 bis 650 MByte, auszeichnet, zu entwickeln.

Die besagten magnetischen Aufzeichnungsmedien können beliebige Geometrie aufweisen, wobei Spritzgußscheiben mit dem Durchmesserbereich 1 1/4 [Zoll] bis 5 3/4 [Zoll] zu bevorzugen sind. Die 5 1/4 [Zoll], 3 1/2 [Zoll] und 2 1/2 [Zoll] Scheiben werden zur Durchführung des erfindungsgemäßen Verfahrens besonders bevorzugt eingesetzt.

Insbesondere lag die Aufgabe darin, Kunststoffträger und die geeignete magnetisierbare Schicht dauerhaft zu verbinden.

Gegenstand der Erfindung ist ein magnetisches Aufzeichnungsmedium, aufweisend einen Kunststoffträger aus amorphem Kunststoff, eine haftvermittelnde, UV-härtende Lackschicht als Zwischenschicht, gegebenenfalls eine nicht magnetische weitere metallische Zwischenschicht, und eine magnetisierbare, bindemittelfreie Metallschicht als Deckschicht.

Zur Herstellung der erfindungsgemäßen Aufzeichnungsmedien sind Kunststoffträger auf Basis von ABS (Acrylnitril-Butadien-Styrol-Pfropfcopolymerisate), PC (Polycarbonat), HIP-PC (s. beispielsweise US-A-4 982 014, DE-A-3 832 396), HIP-Polyarylethersulfon, (siehe beispielsweise EP-A-0 362 603) Polyarylether, wie Polyaryletherketon und Polyarylethersulfon (s. beispielsweise EP-A-0 001 879), ferner PMMA (Polymethylmethacrylat) bzw. deren Blends untereinander gut geeignet.

Leichtfließende Polycarbonattypen bzw. deren Mischungen mit ABS und flammhemmend ausgerüsteten Typen sind zur Herstellung von besagten Medien besonders gut geeignet. Flammhemmendes Ausrüsten von Kunststoffen ist bekannt. Hierzu werden beispielsweise, wie in GB-A 2 126 231 und DE-A 4 007 242 beschrieben, polybromierte Bisphenole und halogenierte Benzylphosphonate, insbesondere Perfluorbutansulfonsäure-Kalium-Salze (vergl. beispielsweise DE-A-1 930 257) ferner Phosphorsäureester (vergl. beispielsweise DE-A-4 040 243 und DE-A-4 005 376) beziehungsweise als flammhemmende Füll- und Zusatzstoffe Teflon und Kryolith eingesetzt.

Es wurde nun gefunden, daß man bindemittelfreie magnetisierbare Auflagen mit guter Haftung und Abriebfestigkeit erzielen kann, wenn man die Trägeroberfläche zunächst mit einer UV-härtenden Auflage versieht und anschließend bekannten Metallisierungsprozessen aussetzt.

Zur Herstellung von erfindungsgemäßen funktionellen Auflagen geeignete UV-härtende Lacksysteme sind grundsätzlich bekannt (vgl. beispielsweise US-A-3 968 305, WO 80/00 968, EP-A-0 274 593, EP-A-0 274 596, EP-A-0 020 344, US-A-3 297 745, US-A-3 673 140, R. Hohlman et al., "UV- and IR-Curing for Printing Inks, Coatings and Paints", Published by Sita-Technology, London). Die besagten Lacksysteme enthalten Bindemittel mit mehreren Doppelbindungen in der Molekülkette und erzeugen bei UV-Bestrahlung mit Hilfe von Photoinitiatoren Radikale unter Ausbildung von vernetzten Strukturen, Dabei sind insbesondere ungesättigte, oligomere Polyesterharze, Harze vom Epoxid-Typ, Phenoxidharze, Polyurethanharze und Polybutadien-Elastomere bzw. Polyacrylate geeignet.

Zur Durchführung werden besonders bevorzugt lösemittelfreie Acrylat-modifizierte Polyurethan-Typen (vgl. hierzu JR. Barclay, "Acrylated Urethane Oligomers-New Raw Materials for Adhesives", Radiation Curing, (1979)) bzw. Epoxid-Typen (vgl. hierzu "Epoxy-Resin 370", Techn. Bull. Shell Chem. Co., (2/77)), die monomere Acrylate abgeleitet von Acrylsäure, Methacrylsäure bzw. deren Estern enthalten, eingesetzt.

Ohne den Umfang des erfindungsgemäßen Verfahrens einzuschränken, empfiehlt es sich, in besonderen Fällen den besagten Lackierungen handelsübliche anionische, kationische oder neutrale Fluortenside beizufügen. In diesem Zusammenhang sei auf Lithium-fluoralkylsulfonat, Fluoralkylpolyethoxylat, Tetraethylammonium-fluoralkylsulfonat, Fluoralkylpolyethoxylat, Polypropoxylat, quarternäres Fluoralkylammonium-Jodid, Ammoniumsalze des Fluoralkylsulfonamidderivates hingewiesen. Diese Zusätze verbessern die Benetzungsfähigkeit des Lackes und erzeugen eine glattere Oberfläche.

Die Menge der Zusätze beträgt bevorzugt von 0,01 bis 2,0 Gew.-% (bezogen auf Gesamt lackmasse). Besonders bevorzugte Mengen liegen bei 0,05 bis 0,3 Gew.-%.

Den UV-härtenden Lackauf lagen werden bevorzugt Komplexe der Edelmetalle der 1. und 8. Nebengruppe des Periodensystems der Elemente zugegeben. Als Edelmetall-Komplexe kommen insbesondere Pd, Pt, Au und Ag in Betracht, wie sie beispielsweise in EP-A 34 485, EP-A 81 438 und EP-A 131 195 beschrieben werden, Die solchermaßen modifizierten Lacksysteme sind besonders für die unten beschriebene naßchemische Beschichtung mit Metallschichten geeignet.

Besonders geeignet sind organometallische Verbindungen des Palladiums mit Olefinen (Dienen) mit α,β-ungesättigten Carbonylverbindungen, mit Kronenethern, mit Nitrilen und mit Diketonen, wie Pentadion-2,4. Ganz besonders geeignet sind 1,2- und 1,3-Butadienpalladiumdichlorid, Bisacetonnitrilpalladiumdichlorid, Bisbenzonitril-palladiumdichlorid, 4-Cyclohexen-1,2-dicarbonsäureanhydridpalladiumdichlorid, Mesityloxidpalladiumchlorid, 3-Hepten-2-on-palladiumchlorid, 5-Methyl-3-hexen-2-on-palladiumchlorid und Bispentadion-2,4-palladium. Ferner kommen O-wertige Komplexverbindungen, wie Palladium(O)-tetrakistriphenylphosphin, in Betracht.

Die Menge des Edelmetalls beträgt von 0,02 bis 3,5 Gew.-%, bezogen auf die lösungsmittelfreie Lackmasse. Die bevorzugte Edelmetallmenge liegt bei 0,025 bis 1,5 Gew.-%.

Die UV-härtenden Lackauflagen werden nach herkömmlichen Techniken, wie Besprühen, Bestempeln, Siebdrucken, Tauchen usw., auf die Trägeroberfläche aufgebracht. Um dünnere Lackauflagen der Schichtdicke von bevorzugt 0,5 bis 3 µm und einer Rauhigkeit von 0,01 bis 0,3 µm zu erzeugen, empfiehlt es sich, die Lackauflagen nach dem "Spin-Coating-Verfahren" bei einer Umdrehungsgeschwindigkeit ≧1000 U/min auf die Kunststoffträger aufzutragen. Die chemische Härtung der Lackauflagen wird mittels UV-Licht der Wellenlänge 360 bis 180 nm im Verlaufe von 1 sec. bis mehreren Minuten durchgeführt.

Als bindemittelfreie, magnetisierbare Metallauflagen kommen Ni, Co und deren Legierungen untereinander bzw. ihre dotierten Typen mit Phosphor und/oder Bor in Frage. In besonderen Fällen kann selbstverständlich ein zusätzliches Dotieren mit Cr oder Fe vorgenommen werden.

Das Aufdampfen der besagten Metalle kann nach den bekannten üblichen Vakuumtechniken vorgenommen werden (siehe beispielsweise J.C. Lodder, Thin Solid Films 101, (1983), 61; J.A. Aboulf, IEEE Trans. Magn. 17(6), (1981), 3160; F. Ono et al., J. Phys. Soc., Jpn., 46, (1979), 462; B.D. Cullity, "Introduction to Magnetic Materials, Addison-Wesely, 1st edn., (1972), 212; S. Iwadaki et al., IEEE Trans. Magn., 14(5), (1978), 849; J. Burd et al., J, Magn. and Magn. Mater., 9, (1978), 333 und E.R. Wuori et al., J. Vac. Sci. Technol., 20(2), (1982), 171).

Die erfindungsgemäß modifizierten Kunststoff-Oberflächen können für eine naßchemische Metallabscheidung durch Reduktion sensibilisiert werden, Dazu können bevorzugt die in der Galvanotechnik üblichen Reduktionsmittel, wie Hydrazinhydrat, Formaldehyd, Hypophosphit oder Borane, verwendet werden, Natürlich ist der Einsatz anderer Reduktionsmittel möglich. Bevorzugt wird die Reduktion in wäßriger Lösung durchgeführt. Es sind aber auch andere Lösungsmittel, wie Alkohole, Ether, Kohlenwasserstoffe, einsetzbar. Selbstverständlich können auch Suspensionen oder Aufschlämmungen der Reduktionsmittel verwendet werden.

Zur Durchführung der naßchemischen Metallabscheidung werden chemische Metallisierungsbäder auf Basis von Co/Ni-Salzen, die als Reduktionsmittel Hyprophosphit oder Borate enthalten, besonders bevorzugt eingesetzt. Solche Bäder sind bekannt (vgl. beispielsweise K. Hono et al., J. Magn. Mater., 80, (1989), 137; M. Aspland et al., IEEE Trans. Magn. MAG, 5, (1969), 314 und T. Chen et al., J. Appl. Phys., 49, (1977), 1816).

Die Schichtdicke der Metallauflage beträgt bevorzugt von 0,01 bis 3 µm variiert werden. Die besonders bevorzugte Schichtdicke liegt bei 0,05 bis 0,1 µm. Die so aktivierten Oberflächen können direkt zur stromlosen Metallisierung eingesetzt werden. Es kann aber auch erforderlich sein, die Oberflächen durch Spülen von Reduktionsmittelresten zu befreien Selbstverständlich können die Proben nachträglich mit einer ionomeren oder metallorganischen Aktivierungslösung aktiviert werden (vgl. beispielsweise EP-A-34 485, EP-A-81 438, EP-A-131 195 und R. Weiner, Kunststoff-Galvanisierung, Eugen G. Lenze Verlag D. 7968 Saulgau/Württ. (1973)).

Eine ganz besonders bevorzugte Ausführungsform des erfindungsgemäßen Verfahrens besteht darin, daß die Reduktion im Metallisierungsbad gleich mit dem Reduktionsmittel der stromlosen Metallisierung durchgeführt wird. Diese Ausführung stellt eine Vereinfachung der stromlosen Metallisierung dar. Diese ganz einfache Ausführungsform besteht nur noch aus drei Arbeitsgängen; Eintauchen des Substrats in die Lösung der organischen Verbindung bzw. Aufbringen oder Aufsprühen der UV-härtenden Lackschicht, Verdampfen des Lösungsmittels und Eintauchen der so aktivierten Oberflächen in das Metallisierungsbad, wo die Reduktion und Metallisierung stattfindet.

Eine weitere bevorzugte Ausführungsform der Erfindung besteht darin, daß man die UV-härtende Zwischenschicht zunächst mit einer nicht magnetischen metallischen Zwischenschicht gegenüber elektromagnetischen Störfeldern abschirmt und dann die gewünschte magnetisierbare Deckschicht abscheidet. Die Abschirmung von Kunststoffen mit Hilfe von nicht magnetischen Metallauflagen ist bekannt (vgl. A.B ledzi et al.; Kunstoffe 74, S. 89-96 (1984). Hierzu wird die UV-härtende Zwischenschicht zunächst mit einer Al-, Cu-, Ni- oder Cu/Ni-Auflage versehen, Das Aufbringen der Cu-, Ni- oder Cu/Ni-Auflage wird vorzugsweise auf chemisch-galvanischem Wege vorgenommen (vgl. hierzu R. Weiser "chemische Vernickelung" Eugen G. Lenze Verlag Saufgan/Württ. (1974) und R. Weiser "Kunststoff-Galvanisierung" S. 194-204, Eugen. G. Lenze Verlag Saufgan/Württ. (1973)). Die Al-Auflage wird mit herkömmlichen Vakuumtechniken, z.B. Vakuumverdampfung aufgebracht. Die Schichtdicke der besagten metallischen Zwischenschicht beträgt bevorzugt von 0,5 bis 30 µm. Der besonders bevorzugte Schichtdickenbereich liegt bei 2-10 µm. Selbstverständlich kann die Metalloberfläche durch eine mechanische Nachbehandlung wie Polieren oder Schleifen nachträglich mit der erwünschten Oberflächenrauhigkeit < 0,3 µm versehen werden.

Die guten mechanischen Eigenschaften des polymeren Basismaterials, wie Schlagzähigkeit, Biegefestigkeit und Randfaserdehnung, werden durch die Lackierungs- und Metallisierungsvorgänge nicht negativ beeinflußt.

Um den besagten Auflagen bessere Gleit- und Kratzfestigkeit zu verleihen, kann selbstverständlich eine zusätzliche Schutzschicht auf die metallische Deckschicht aufgetragen bzw. eine Finish-Beschichtung vorgenommen werden. Solche Beschichtungen sind Stand der Technik. In diesem Zusammenhang sei beispielsweise auf graphitartige Auflagen hingewiesen, die im Vakuum abgeschieden werden, oder auf kratzfeste, nachträglich chemisch zu vernetzende Polyacrylate.

Weiterer Gegenstand der Erfindung ist die Verwendung der erfindungsgemäßen Aufzeichnungsmedien zur Herstellung von Computerfestspeicherplatten.

Im folgenden wird die Erfindung an Beispielen erläutert.

Bei den in den Beispielen genannten Produkten handelt es sich zum Teil um eingetragene Warenzeichen.

### Beispiel 1

Eine spritzgegossene 5 1/4 Zoll-Polycarbonatscheibe mit einer Dicke von 2 mm wird nach dem "Spin-Coating-Verfahren" bei einer Umdrehungsgeschwindigkeit von 2500 U/min mit einem handelsüblichen, Acrylat-modifizierten, UV-härtenden Polyurethan-Präpolymerisat des Typs Regulux® Rz 3201 der Fa. Dr. Renger GmbH, D-8618 Strullendorf, das noch zusätzlich 1,0 g/l Bisbenzonitrilpalladiumchlorid und 0,3 g/l Fluortensid FT 405 der Fa. Bayer AG, D-5090 Leverkusen, enthält, beschichtet. Anschließend wird die Probe bei Raumtemperatur mittels UV-Belichtung (der Wellenlänge von ∼310 nm) im Verlaufe von 60 sec. vernetzt.

Nun wird die Probe in einem chemischen Co-Bad, bestehend aus
2,6 g/l CoSO₄
12,0 g/l Na-hypophosphit
22,0 g/l Na-borat
50,0 g/l Citronensäure
17,0 g/l Glyzin
pH-Wert ^{∼}10,0 eingestellt mit 25 %iger NH₄OH-Lösung,
bei 70°C Raumtemperatur im Verlaufe von 10 min, mit einer 0,05 µm starken Co-B-Auflage versehen.

Man bekommt eine magnetische Festplatte mit einer Metallhaftung von Gt O nach DIN 53 151. Die Koerzitivkraft der Metallauflage liegt bei ∼950 Oe.

### Beispiel 2

Eine 5 1/2 Zoll-Polycarbonatscheibe mit einer Stärke von 2 mm wird nach Beispiel 1 mit einem Acrylat-modifizierten, UV-härtenden Epoxy-Präpolymerisat des Typs Regolux Rz 3203 der Fa. Dr. Renger GmbH, D-8618 Strullendorf, das noch zusätzlich 0,8 g/l Heptenonpalladiumchlorid und 0,2 g/l Fluortensid FT 405 der Fa. Bayer AG, 5090 Leverkusen, enthält, beschichtet.

Nun wird die Probe in einem chemischen Co-Bad, bestehend aus
23 g/l CoSO₄ 7H₂O
43 g/l Natriumhypophosphit
32 g/l Borsäure
150 g/l Zitronensäure
51 g/l Aminoessigsäure,
bei 70°C im Verlaufe von 8 min mit einer 0,05 µm starken Co-P-Auflage versehen Man bekommt eine magnetische Festplatte mit einer Rauhtiefe von <0,1 µm. Die Metallhaftung liegt bei Gt O. Die Metallauflage hat eine Koerzitivkraft von 980 Oe.

### Beispiel 3

Eine Polycarbonatscheibe nach Beispiel 2 wird nach T. Okuwaki et al., J Appl. Phys., 53, (1982), 2588, mit einer Co-Cr-Auflage der Schichtdicke von 0,008 µm versehen.

Man bekommt eine magnetische Festplatte. Ihre Koerzitivkraft liegt bei ∼750 Oe. Die Metallhaftung ist sehr gut (Gt O gemessen nach DIN 53 151).

### Beispiel 4

Eine 5 1/4 Zoll-Polycarbonatscheibe nach Beispiel 2 wird mit einer Acrylat-modifizierten Polyurethan-Auflage versehen. Nun wird die Probe in einer Lösung, bestehend aus 0,8 g Bisacetonitrilpalladiumdichlorid und 750 ml Ethanol, im Verlauf von 5 min, aktiviert an der Luft getrocknet und anschließend nach Beispiel 2 mit einer Co-P-Auflage versehen.

Man bekommt eine magnetische Festplatte mit einer Rauhtiefe von ∼0,1 µm. Die Metallhaftung liegt bei Gt O nach DIN 53 151.

## Patentansprüche

1. Magnetisches Aufzeichnungsmedium, aufweisend einen Kunststoffträger aus amorphem Kunststoff, eine haftvermittelnde, UV-härtende Lackschicht als Zwischenschicht, gegebenenfalls eine nichtmagnetische weitere metallische Zwischenschicht und eine magnetisierbare, bindemittelfreie Metallschicht als Deckschicht.

2. Magnetisches Aufzeichnungsmedium gemäß Anspruch 1, dadurch gekennzeichnet, daß der amorphe Kunststoff Polycarbonat oder eine Mischung von Polycarbonat mit ABS ist.

3. Magnetisches Aufzeichnungsmedium nach Anspruch 1, dadurch gekennzeichnet, daß die Lack-Zwischenschicht aus einem Lack auf der Basis von Acrylatmodifizierten Polyurethan- und/oder Epoxidharzen besteht.

4. Magnetisches Aufzeichnungsmedium nach Anspruch 3, dadurch gekennzeichnet, daß die Lack-Zwischenschicht zusätzlich von 0,01 bis 2 Gew.-% bezogen auf die Lackmasse Fluortenside enthält.

5. Magnetisches Aufzeichnungsmedium nach einem der Ansprüche 1 bis 3, dadurch gekennzeichnet, daß die Lack-Zwischenschicht eine Oberflächenrauhigkeit von <0,3 µm und eine Schichtdicke von 0,5 bis 3 µm aufweist.

6. Magnetisches Aufzeichnungsmedium nach den Ansprüchen 1 bis 3 dadurch gekennzeichnet, daß die Lack-Zwischenschicht zusätzlich metallorganische Komplexe von Elementen der 1. und/oder 8. Nebengruppe des Periodensystems, in einer Menge von 0,02 bis 3,5 Gew.-%, bezogen auf die Lackmasse 7 enthält.

7. Magnetisches Aufzeichnungsmedium nach einem der Ansprüche 1 bis 5, dadurch gekennzeichnet, daß die Metalldeckschicht eines oder eine Mischung der Metalle aus der Gruppe bestehend aus Kobalt, Nickel, Chrom und Eisen, sowie gegebenenfalls weitere Zusätze von Phosphor und/oder Bor enthält.

8. Magnetisches Aufzeichnungsmedium gemäß dem Anspruch 1, dadurch gekennzeichnet, daß die nicht magnetische Metall-Zwischenschicht aus Al, Cu, Ni oder Cu/Ni besteht und eine Schichtdicke von 0,5 bis 30 µm und eine Oberflächenrauhigkeit von < 0,3 µm aufweist.

9. Verfahren zur Herstellung eines magnetischen Aufzeichnungsmediums nach Anspruch 1, dadurch gekennzeichnet, daß eine haftvermittelnde, UV-härtende Lack-Zwischenschicht auf die Kunststoffträgeroberfläche mittels der "Spin-coating-Technik" aufgebracht wird, anschließend gegebenenfalls die nicht magnetische Metallzwischenschicht und dann die magnetische Metalldeckschicht mittels Vakuumbedampfung oder mit Hilfe eines naß-chemischen Metallisierungsverfahrens auf die Lack-Zwischenschicht aufgebracht wird.

10. Verwendung des magnetischen Aufzeichnungsmediums nach den Ansprüchen 1 bis 8 zur Herstellung von Festspeicherplatten für Computer.
